# EUROPEAN PATENT APPLICATION

(11) **EP 2 696 641 A1**
(43) Date of publication of application: **12.02.2014**
(21) Application number: 12179932.4
(22) Date of filing: 09.08.2012
(51) Int. Cl.: H04W 76/02, H04W 48/02, H04W 48/06

(54) **Method, apparatus and computer program product for reducing the retransmission of requests by a user equipment.**

(71) Applicant: BlackBerry Limited, Waterloo, ON N2K 0A7 (CA)
(72) Inventor: Parr, Simon, Birmingham, B1 2RS (GB)
(74) Representative: Bryn-Jacobsen, Caelia

(57) **Abstract**

A method and apparatus in a user equipment is described for handling failures to receive messages in response to re-transmitted requests.

## Description

### BACKGROUND

### TECHNICAL FIELD

This application relates to mobile telecommunications systems in general, and in particular relates to a method and apparatus in a mobile telecommunications system for user equipment handling re-transmission of requests in selection, re-selection and cell update procedures.

### DESCRIPTION OF THE RELATED ART

In a typical wireless cellular radio system, user equipment (UE), or a `device', communicates via one or more radio access networks (RANs) to one or more core networks. User equipment (UE) comprises various types of equipment such as mobile telephones (also known as cellular or cell phones, including smart phones), laptops with wireless communication capability, personal digital assistants (PDAs) etc. These may be portable, hand held, pocket sized, installed in a vehicle etc and communicate voice and/or data signals with the radio access network.

In the following, reference may be made to E-UTRAN (e.g. LTE), UTRAN (e.g. Universal Mobile Telecommunication System, UMTS) and GERAN and to particular Standards. However it should be understood that the invention is not intended to be limited to any particular mobile telecommunications system.

A radio access network covers a geographical area typically having a plurality of cell areas. Each cell area is served by at least one base station, which in UMTS and LTE may be referred to as a Node B and enhanced-Node B (eNB) respectively. The base stations communicate at radio frequencies over an air interface with the UEs within range of the base station. Several base stations may be connected to a radio network controller (RNC) in UTRAN systems which controls various activities of the base stations. The radio network controllers are typically connected to a core network.

Various standardization bodies are known to publish specifications/standards and set standards for mobile telecommunication systems. For instance, the 3GPP (Third Generation Partnership Project) has been known to publish and set standards for mobile telecommunications. Within the scope of a particular standardization body, specific partners publish and set standards in their respective areas.

Problems may arise when a UE attempts to communicate with a cell. In UMTS/WCDMA networks for example, UE connection or cell update attempts can be unsuccessful, due to any number of reasons; including congestion, equipment failure etc. In the case of congestion, the congestion may be at the cell, at the radio network controller (RNC) or at the entire network, for example. The congestion may be worse in densely populated areas, or at certain/busy times of day for a given location.

Consider a UE that wants to establish or re-establish connection a with a Radio Resource Control (RRC) connection mode from IDLE state. The UE moves, for example, to a real, or pseudo, Cell Forward Access channel (FACH) state and sends an rrcConnection Request message to the UTRAN on a common channel or shared transport channel on the uplink (eg RACH). The UE will then typically receive a RACH acknowledgment from the UTRAN, and will wait for a response on the FACH comprising an rrcConnection SetUp message.

Whilst waiting in real or pseudo CELL_FACH state, the UE consumes considerable amounts of battery power. As an example, a typical UMTS UE consumes 3.5 mA during IDLE mode operation (when DRX is set to 7 which is a typically value configured by the network), whereas in CELL_FACH state the current consumption rises to 110 mA. Also, UEs' initiating the radio connection and waiting in pseudo CELL_FACH state are not reachable for paging to initiate mobile-terminated calls in this state, since neither paging control channel (PCCH) (paging TYPE1) applicable for IDLE mode, CELL-PCH and URA-PCH RRC states nor a dedicated control channel (DCCH) applicable for CELL-FACH and CELL_DCH RRC states (paging TYPE2) can reach the UEs.

After waiting for a response on the FACH for a period of time (T300 in System Information Block Type 1, SIB1), the UE retransmits the rrcConnection Request message. After a number of attempts (N300 in SIB 1), the device returns to Idle and selects a cell according to the Standard 25.331 v8.1.3.5 and section 8.5.2.

### 8.1.3.5 Cell Reselection, T300 or T318 Timeout

1) If the UE has not yet received an RRC CONNECTION SETUP message with the value of the IE "Initial UE identity" equal to the value of the variable INITIAL_UE_IDENTITY; and
1) if cell reselection or expiry of timer T300 or timer T318 occurs:
   The UE shall:
1) check the value of V300:
   ....
   2) if V300 is greater than N300
      3) Enter Idle mode
      3) Consider the procedure unsuccessful
      3) Other actions the UE shall perform when entering idle mode from connected mode are specified in subclause 8.5.2
      3) The procedure ends

Here
T300 = is the time given for the UE to receive RRC Connection Setup from UTRAN
T318 = is the time given for the UE to receive RRC Connection Setup for MBMs from UTRAN (our devices do not support this)
V300 = is the counter for RRC Connection Requests
N300 = is the maximum number of attempts the UE sends RRC Connection Requests

The above values are broadcasted in System Information Block 1 by the UTRAN and read by the UE when camping on the cell.

### 8.5.2 Actions when entering idle mode from connected mode

When entering idle mode from connected mode, the UE shall:
....

When leaving connected mode according to [4], the UE shall:
1) Perform cell selection

[4] is reference to another Standard 25.304 "UE Procedures in Idle Mode and Procedures for Cell Reselection in Connected Mode".
Thus, according to the existing standard, if the problem cell is the strongest cell, this would be the cell camped on in another attempt.

Networks can perform a similar approach for some connected mode UEs (eg UEs in CELL_PCH (excluding Enhanced Cell FACH capable UEs with a dedicated H-RNTI) and URA_PCH) when a connected mode device initiates a cellUpdate Request message to request radio link resources by sending a cellUpdate Request message to the UTRAN. When no cellUpdate Confirm message is received, the cellUpdate Request message is re-transmitted according to T302 and N302 setting in SIB1.

However, the cell the UE attempts to select/re-select, may be the cell it has just left. The UE may try to camp on it, and the scenario may repeat, again wasting further resources.

The present approach is battery and signalling intensive causing extra strain on the network and limited battery capacity of the mobile device, and renders UEs unreachable for undesirable periods of time.

There are thus proposed strategies for a method and apparatus in mobile telecommunications system for user equipment to handle such scenarios efficiently. A number of such strategies are detailed below.

Other aspects and features of the proposed strategy will become apparent to those ordinarily skilled in the art upon review of the following description of specific embodiments of an apparatus and method in mobile telecommunications system user equipment.

### BRIEF DESCRIPTION OF THE DRAWINGS

Embodiments will now be described, by way of example only, with reference to the attached drawings, in which:

Figure 1 illustrates a first technique in mobile telecommunications system user equipment;

Figure 2 illustrates a second technique in mobile telecommunications system user equipment;

Figure 3 shows an overview of a network and a user equipment device;

Figure 4 is a block diagram illustrating an embodiment of a protocol stack apparatus provided with a RRC block, in accordance with the present application;

Figure 5 is a block diagram illustrating a mobile device, which can act as a UE and co-operate with the apparatus and methods of Figures 1 to 3.

The same reference numerals are used in different figures to denote similar elements.

### DETAILED DESCRIPTION OF THE DRAWINGS

An apparatus and method in mobile telecommunications system for user equipment to more efficiently handle re-transmission of requests in selection, re-selection and cell update procedures is described. In the following description, for the purposes of explanation, numerous specific details are set forth in order to provide a thorough understanding of the present description. It will be apparent, however, to one skilled in the art that the technique may be practised without these specific details. In other instances, well-known structures and devices are shown in block diagram form in order to avoid unnecessarily obscuring the present invention.

The needs identified in the foregoing Background, and other needs and objects that will become apparent from the following description, are achieved by, in one aspect, a method in mobile telecommunications system for user equipment.

In other aspects, there is an apparatus and a computer-readable medium configured to carry out the foregoing actions, as well as a data carrier carrying thereon or therein data indicative of instructions executable by processing means to cause those means to carry out the foregoing actions. Examples are CD-ROMs, memory sticks, dongles, transmitted signals, downloaded files etc.

In particular, the method may be implemented in a mobile telecommunications device, with or without voice capabilities, or other electronic devices such as handheld or portable devices.

The technique relates to a method in wireless telecommunication system user equipment and in particular the operations that are undertaken in a user equipment, comprising when a message responsive to a re-transmitted request associated with a cell is not received; barring the cell.

Preferably, the method further includes transmitting the request; and in which re-transmission is responsive to failure to receive a response message to the request. Failure to receive a response message may comprise failure to receive a response message with a period measured in time, or by a number of events. The re-transmission may be the N re-transmission of the request, where N is related to information in system information block SIB 1. Not receiving the message may comprise not receiving within a further period measured in time, or measured by a number of events.

The further period may be related to information in SIB1. The request may comprise an rrcConnection request, and the message comprises an rrcConnection SetUp message. The request may comprise a cellUpdate request message, and the message comprises a cellUpdate confirm message. The message not being received may be associated with cell congestion, congestion of the network within which the cell is operable, or cell failure.

There is also described a wireless telecommunications device comprising a component configured to when a message responsive to a re-transmitted request associated with a cell is not received; bar the cell.

Preferably, the component is further configured to carry out the method described above.

Another aspect relates to data carrier carrying data comprising instructions executable by processing means to cause those means to carry out a method above.

Another aspect relates to a computer readable medium having computer executable instruction adapted to cause the device to perform a method above.

Example 1.

According to a first example, a UE in IDLE mode attempts to re-connect to a cell within a network by moving to pseudo FACH and sending an rrcConnection Request message to the UTRAN on RACH. In another aspect, the example extends to a cell selection procedure. In this first example, the UE receives an acknowledgment from the UTRAN, and waits for an rrcConnection SetUp message on FACH.

After waiting for a response on FACH for a period of time (specified by T300 in System Information Block Type 1, SIB 1), the UE re-transmits the rrcConnection Request message.

In another aspect, the UE may re-transmit the rrcConnection Request message following an rrcConnection Request rejection.

After a number of attempts to re-transmit (N300 as specified in SIB 1), the device returns to Idle and selects a cell according to Standard procedure.

According to this example, the cell the UE is then to attempt to camp on, following the Standard as described above, is the cell the UE has just left. Were the UE to try to camp on this cell, and the conditions (congestion, cell fault..) that caused the failure to recevive the rrcConnection Setup message were persisting, then the same scenario would repeat whereby there would be a number of re-transmission requests wasting resources, and the UE would be unreachable.

Thus, in this example, the problem cell with respect to which the transmission requests have been made, is barred for a period before re-selection to it can again be attempted. This barring effectively forces the UE choose another neighbour cell in preference during the period of barring, referred to as a bar period, which other cell might be able to service the connection request, and thus avoid unnecessary waste of resources.

In this example, the bar period is a period of time. In another example, it is a number of events, for example, although in other aspects any quantifiable measure may be used.

To bar the cell, in one example, it is added to a list of "other" cells for a period of time where the UE is not allowed to reselect to these cell. For instance, the cells are not part of the neighbor list. The time for barring can be chosen from 10, 20, 40, 80, 160, 320, 640 or 1280 seconds in one example. In one example, 80 seconds is chosen. By baring the strongest problem cell, the UE is effectively freed to try a different cell.

In one aspect, the cell is barred by marking it as unavailable in an IE.

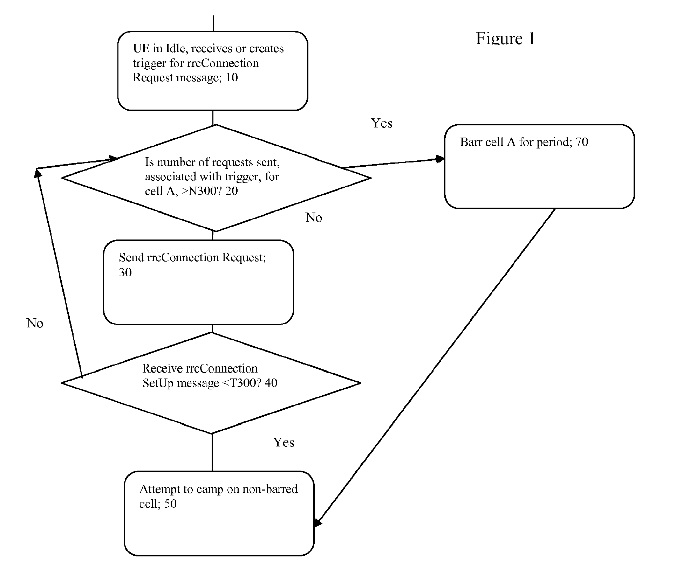

This process is illustrated in Figure 1.

The UE in 10 is in IDLE mode, in receipt of, or initiating a trigger, for an rrcConnection Request message to the UTRAN.

In step 20, it is determined whether the number of rrcConnection Requests associated with that trigger, for a cell A, is greater than N300.

If the number of rrcconnection Requests is not greater than N300, then in 30 the UE sends, or re-transmits, an rrcConnection Request to the UTRAN.

If, in 40, the UE receives an rrcConnection SetUp Message from the UTRAN in less than T300, then in 80 the UE attempts to camp on another non-barred cell, which may be cell A.

N300 and T300 in this example are specified in SIB1, although in another aspect, one or both may be set in another way, such as being specified by an information element (IE) in another SIB.

If, in 40, no rrcconnection SetUp message is received within T300, then following 60, the method reverts to step 20 where there is a determination of whether the number of rrcConnection Requests for cell A, that have been sent, associated with the trigger, is less than N300.

In the case that the number of rrcconnection Requests that have been sent associated with the trigger is greater than N300, then in 70, cell A is barred from attempts to camp on it for a period. The UE returns to Idle and attempts to camp on next (for example, most suitable according to the Standard), non-barred cell, in 80.

Thus, according to this example, the barring of the problem cell minimises the time spent in resource consumptive, non-reachable states when waiting for the rrcConnection SetUp message, and re-transmitting the rrcConnection requests in repetitive loops to a cell that has a problem associated with it. The approach allows an attempt on another cell which might be a less favourable cell according to re-selection criteria, for example, but might nevertheless be able to service the request.

Example 2

In example 2, a UE in a connected state, initiates a cellUpdate request message to request radio link resources by sending a cellUpdate Request message to the UTRAN. When no cellUpdate Confirm message is received, the cellUpdate Request message is re-transmitted according to T302 and N302 setting in SIB1.

As for example 1, when the number of re-transmission requests exceeds N302, then the cell in question is barred; effectively allowing another cell to fulfil the request, minimising wasted resources.

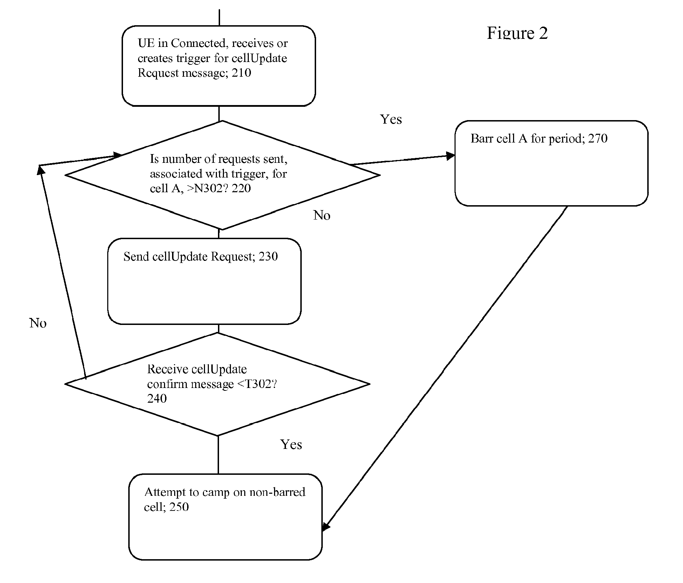

This process is illustrated in Figure 2.

The UE in 210 is in a connected state, and in receipt of, or initiating a trigger, for a cellUpdate Request message to the UTRAN.

In step 220, it is determined whether the number of cellUpdate Requests associated with that trigger, for a cell A, is greater than N302.

If the number of requests is not greater than N302, then in 230 the UE sends, or re-tramsmits, a request to the UTRAN.

If, in 240, the UE receives an cellUpdate Confirm message from the UTRAN in less than T302, then in 280 the UE attempts to camp on the most suitable, for example, non-barred cell, which may be cell A.

N302 and T302 in this example are specified in SIB1, although in another aspect, one or both may be set in another way, such as being specified by an information element (IE) in another SIB.

If, in 240, no cellUpdateConfirm message is received within T302, then following 260, the method reverts to step 220 where there is a determination of whether the number of cellUpdate Requests for cell A, that have been sent, associated with the trigger, is less than N302.

In the case that the number of requests that have been sent associated with the trigger is greater than N302, then in 270, cell A is barred from attempts to camp on it for a period. The UE returns to Idle and attempts to camp on a non-barred cell, in 280.

As for example 1,this approach enhances the efficiency of the cell update procedure by minimising resources, and the time taken to complete the procedure in the event that is a problem with a cell, caused, for example by congestion or a cell fault.

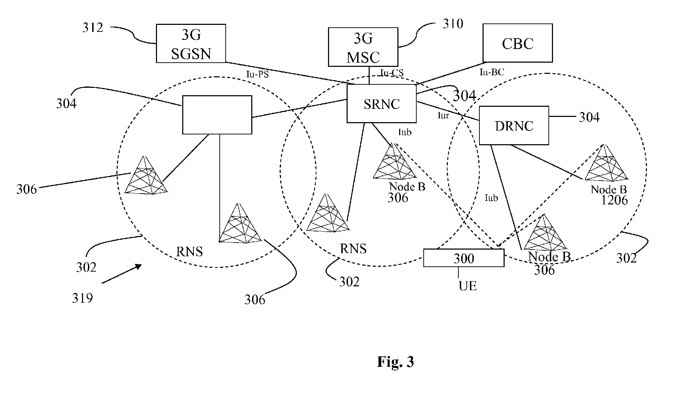

Figure 3 shows an overview of the radio access network 319 (e.g. E-UTRAN) used in a mobile communications system. The network 319 as shown in Figure 3 comprises three Radio Network Subsystems (RNS) 2. Each RNS has a Radio Network Controller (RNC) 4. Each RNS 2 has one or more Node B 6 which are similar in function to a Base Transmitter Station of a GSM radio access network. User Equipment UE 300 may be mobile within the radio access network. Radio connections (indicated by the straight dotted lines in Figure 3) are established between the UE and one or more of the Node Bs in the network 419.

The radio network controller controls the use and reliability of the radio resources within the RNS 2. Each RNC may also connected to a 3G mobile switching centre 10 (3G MSC) and a 3G serving GPRS support node 12 (3G SGSN).

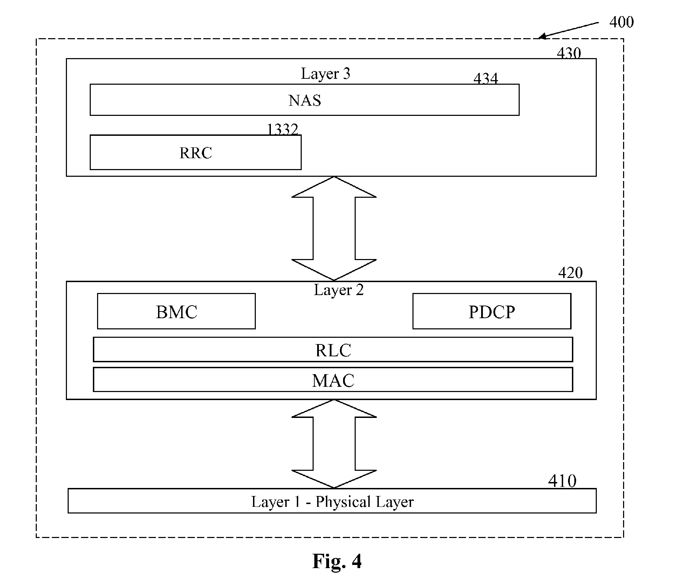

Figure 4 is a block diagram illustrating an embodiment of a protocol stack provided in a UE. A Radio Resource Controller (RRC) block 432 is a sub layer of Layer 3 430 of a protocol stack 400. The RRC 432 exists in the control plane only and provides an information transfer service to the non-access stratum NAS 434. The RRC 432 is responsible for controlling the configuration of radio interface Layer 1 410 and Layer 2 420. When the network wishes to change the UE configuration it will issue a message to the UE containing a command to invoke a specific RRC procedure. The RRC layer 432 of the UE decodes this message and initiates the appropriate RRC procedure. Generally when the procedure has been completed (either successfully or not) then the RRC sends a response message to the network (via the lower layers) informing the network of the outcome. It should be noted that there are a few scenarios where the RRC will not issue a response message to the network and, in those cases the RRC need not and does not reply.

The strategies in mobile telecommunications system user equipment as discussed above with reference to the drawings may be implemented by the RRC block 432.

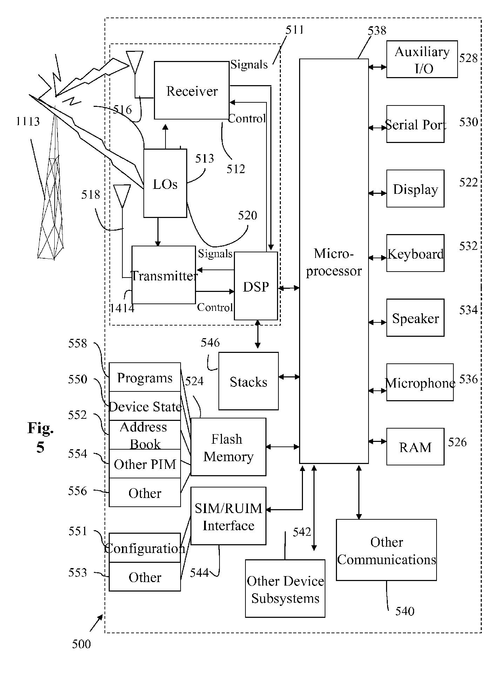

Turning now to Figure 5, Figure 5 is a block diagram illustrating a mobile device, which can act as a UE and co-operate with the apparatus and methods of Figures 1 to 4, and which is an exemplary wireless communication device. Mobile station 500 is preferably a two-way wireless communication device having at least voice and data communication capabilities. Mobile station 500 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 500 is enabled for two-way communication, it will incorporate a communication subsystem 511, including both a receiver 512 and a transmitter 514, as well as associated components such as one or more, preferably embedded or internal, antenna elements 516 and 516, local oscillators (LOs) 513, and processing means such as a processing module such as a digital signal processor (DSP) 520. As will be apparent to those skilled in the field of communications, the particular design of the communication subsystem 511 will be dependent upon the communication network in which the device is intended to operate. For example, mobile station 500 may include a communication subsystem 511 designed to operate within the Mobitex™ mobile communication system, the DataTAC™ mobile communication system, GPRS network, UMTS network, EDGE network, LTE network etc.

Network access requirements will also vary depending upon the type of network 502. For example, in the Mobitex and DataTAC networks, mobile station 500 is registered on the network using a unique identification number associated with each mobile station. In UMTS and GPRS networks, however, network access is associated with a subscriber or user of mobile station 500. A GPRS mobile station therefore requires a subscriber identity module (SIM) card in order to operate on a GPRS network. Without a valid SIM card, a GPRS mobile station will not be fully functional. Local or non-network communication functions, as well as legally required functions (if any) such as "911" emergency calling, may be available, but mobile station 500 will be unable to carry out any other functions involving communications over the network 502. The SIM interface 544 is normally similar to a card-slot into which a SIM card can be inserted and ejected like a diskette or PCMCIA card. The SIM card has memory and may hold many key configuration 551, and other information 553 such as identification, and subscriber related information.

When required network registration or activation procedures have been completed, mobile station 500 may send and receive communication signals over the network 502. Signals received by antenna 516 through communication network 502 are input to receiver 512, which may perform such common receiver functions as signal amplification, frequency down conversion, filtering, channel selection and the like, and in the example system shown in Figure 5, analog to digital (A/D) conversion. A/D conversion of a received signal allows more complex communication functions such as demodulation and decoding to be performed in the DSP 520. In a similar manner, signals to be transmitted are processed, including modulation and encoding for example, by DSP 520 and input to transmitter 514 for digital to analog conversion, frequency up conversion, filtering, amplification and transmission over the communication network 502 via antenna 516. DSP 520 not only processes communication signals, but also provides for receiver and transmitter control. For example, the gains applied to communication signals in receiver 512 and transmitter 514 may be adaptively controlled through automatic gain control algorithms implemented in DSP 520.

Mobile station 500 preferably includes processing means such as a microprocessor 536 which controls the overall operation of the device. Communication functions, including at least data and voice communications, are performed through communication subsystem 511. Microprocessor 536 also interacts with further device subsystems such as the display 522, flash memory 524, random access memory (RAM) 526, auxiliary input/output (I/O) subsystems 526, serial port 530, keyboard 532, speaker 534, microphone 536, a short-range communications subsystem 540 and any other device subsystems generally designated as 542.

Some of the subsystems shown in Figure 5 perform communication-related functions, whereas other subsystems may provide "resident" or on-device functions. Notably, some subsystems, such as keyboard 532 and display 522, for example, may be used for both communication-related functions, such as entering a text message for transmission over a communication network, and device-resident functions such as a calculator or task list.

Operating system software used by the microprocessor 536 is preferably stored in a persistent store such as flash memory 524, which may instead be a read-only memory (ROM) or similar storage element (not shown). Those skilled in the art will appreciate that the operating system, specific device applications, or parts thereof, may be temporarily loaded into a volatile memory such as RAM 526. Received communication signals may also be stored in RAM 526.

As shown, flash memory 524 can be segregated into different areas for both computer programs 556 and program data storage 550, 552, 554 and 556. These different storage types indicate that each program can allocate a portion of flash memory 524 for their own data storage requirements. Microprocessor 536, in addition to its operating system functions, preferably enables execution of software applications on the mobile station. A predetermined set of applications that control basic operations, including at least data and voice communication applications for example, will normally be installed on mobile station 500 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 502. In a preferred embodiment, the PIM data items are seamlessly integrated, synchronized and updated, via the wireless network 502, with the mobile station user's corresponding data items stored or associated with a host computer system. Further applications may also be loaded onto the mobile station 500 through the network 502, an auxiliary I/O subsystem 526, serial port 530, short-range communications subsystem 540 or any other suitable subsystem 542, and installed by a user in the RAM 526 or preferably a non-volatile store (not shown) for execution by the microprocessor 536. Such flexibility in application installation increases the functionality of the device and may provide enhanced on-device functions, communication-related functions, or both. For example, secure communication applications may enable electronic commerce functions and other such financial transactions to be performed using the mobile station 500.

In a data communication mode, a received signal such as a text message or web page download will be processed by the communication subsystem 511 and input to the microprocessor 536, which preferably further processes the received signal for output to the display 522, or alternatively to an auxiliary I/O device 526. A user of mobile station 500 may also compose data items such as email messages for example, using the keyboard 532, which is preferably a complete alphanumeric keyboard or telephone-type keypad, in conjunction with the display 522 and possibly an auxiliary I/O device 526. Such composed items may then be transmitted over a communication network through the communication subsystem 511.

For voice communications, overall operation of mobile station 500 is similar, except that received signals would preferably be output to a speaker 534 and signals for transmission would be generated by a microphone 536. Alternative voice or audio I/O subsystems, such as a voice message recording subsystem, may also be implemented on mobile station 500. Although voice or audio signal output is preferably accomplished primarily through the speaker 534, display 522 may also be used to provide an indication of the identity of a calling party, the duration of a voice call, or other voice call related information for example.

Serial port 530 in Figure 5, would normally be implemented in a personal digital assistant (PDA)-type mobile station for which synchronization with a user's desktop computer (not shown) may be desirable, but is an optional device component. Such a port 530 would enable a user to set preferences through an external device or software application and would extend the capabilities of mobile station 500 by providing for information or software downloads to mobile station 500 other than through a wireless communication network. The alternate download path may for example be used to load an encryption key onto the device through a direct and thus reliable and trusted connection to thereby enable secure device communication.

Other communications subsystems 540, such as a short-range communications subsystem, is a further optional component which may provide for communication between mobile station 500 and different systems or devices, which need not necessarily be similar devices. For example, the subsystem 540 may include an infrared device and associated circuits and components or a Bluetooth™ communication module to provide for communication with similarly enabled systems and devices.

When mobile device 500 is used as a UE, protocol stacks 546 include processes for operating as described in mobile telecommunications system user equipment.

EXTENSIONS AND ALTERNATIVES

In the foregoing specification, the invention has been described with reference to specific embodiments thereof. It will, however, be evident that various modifications and changes may be made thereto without departing from the scope of the technique. The specification and drawings are, accordingly, to be regarded in an illustrative rather than a restrictive sense.

It is to be noted that the methods as described have actions being carried out in a particular order. However, it would be clear to a person skilled in the art that the order of any actions performed, where the context permits, can be varied and thus the ordering as described herein is not intended to be limiting.

It is also to be noted that where a method has been described it is also intended that protection is also sought for a device arranged to carry out the method and where features have been claimed independently of each other these may be used together with other claimed features.

Furthermore it will be noted that the apparatus described herein may comprise a single component such as a UE or UTRAN or other user equipment or access network components, a combination of multiple such components for example in communication with one another or a sub-network or full network of such components.

Embodiments have been described herein in relation to 3GPP specifications. However the method and apparatus described are not intended to be limited to the specifications or the versions thereof referred to herein but may be applicable to future versions or other specifications.

A portion of the disclosure of this patent document contains material which is subject to copyright protection. The copyright owner has no objection to the facsimile reproduction by anyone of the patent document or patent disclosure, as it appears in the Patent and Trademark Office patent file or records, but otherwise reserves all copyright rights whatsoever.

## Claims

1. A method in a user equipment, comprising:
when a message responsive to a re-transmitted request associated with a cell is not received within a period;
barring the cell.

2. The method as claimed in claim 1, further including,
transmitting the request; and in which re-transmission is responsive to failure to receive a response message to the request.

3. The method as claimed in claim 1 or claim 2, in which re-transmission is responsive to receiving a rejection message to the request.

4. The method as claimed in claim 1, where failure to receive a response message comprises failure to receive a response message with the period measured in time, or by a number of events.

5. The method as claimed in any one of the preceding claims, where the re-transmission is the N re-transmission of the request, where N is related to information in system information block SIB1.

6. The method as claimed in any one of the preceding claims, where not receiving the message comprises not receiving within a further period measured in time, or measured by a number of events.

7. The method of claim 6, where the further period is related to information in SIB 1.

8. The method of any one of the preceding claims, where the request comprises an rrcConnection request, and the message comprises an rrcConnection SetUp message.

9. The method of any one of the preceding claims, where the request comprises a cellUpdate request message, and the message comprises a cellUpdate confirm message.

10. The method of any one of the preceding claims, where the message not being received is associated with cell congestion, congestion of the network within which the cell is operable, or cell failure.

11. The method of any one of the preceding claims, where barring the cell comprises not allowing the user to camp on the cell.

12. A wireless telecommunications device comprising a component configured to:
when a message responsive to a re-transmitted request associated with a cell is not received within a period;
bar the cell.

13. The device as claimed in claim 11, in which the component is further configured to carry out the method of any one of claims 1-10.

14. A data carrier carrying data comprising instructions executable by processing means to cause those means to carry out a method according to any one of claims 1-11.

15. A computer readable medium having computer executable instruction adapted to cause the device to perform a method of any of claims 1-11.
